# EUROPEAN PATENT APPLICATION

(11) **EP 4 177 849 A1**
(43) Date of publication of application: **10.05.2023**
(21) Application number: 21206976.9
(22) Date of filing: 08.11.2021
(51) Int. Cl.: G06V 20/56, G06V 10/56, G06V 10/25

(54) **METHOD AND DEVICE FOR DETERMINING A COLOR OF A LANE MARKING**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for determining a color of a lane marking for an automated vehicle. The method comprises determining a bounding box of the lane marking based on sensor data of a sensor system installed at the automated vehicle, determining a focus area being located completely inside the bounding box, and determining (S4) the color of the lane marking by determining a color inside the focus area, wherein a size of the focus area depends on a size of the bounding box.

## Description

The present invention is directed to a method for determining a color of a lane marking for an automated vehicle, a computing device, e.g., a control unit, being configured to carry out the method. An automated vehicle comprising the computing device may be provided. Additionally or alternatively, a computer program comprising instructions which, when the program is executed by a computer, e.g., the control unit, cause the computer to carry out the method at least partly may be provided. Additionally or alternatively, a computer-readable medium comprising instructions which, when executed by a computer, cause the computer to carry out the method at least partly may be provided.

In autonomous driving detection of objects, obstacles and driving lanes plays a pivotal role for higher level of autonomy.

US 2016/350603 A1 describes a method for lane detection. The method for lane detection includes generating an edge image including inbound edges of lane-markings corresponding to a road image. Based on an adaptive thresholding of intensity of lane-markings from image strips selected from the image, a plurality of lane masks are extracted. A plurality of valid lane masks are selected from the plurality of lane masks based on a structure and intensity information of the plurality of valid lane masks in the image strips. An overlap between the inbound edges and the valid lane masks is determined to identify a plurality of edge segments of the pair of inbound edges belonging to the lane-markings. A set of valid edge segments of the pair of inbound edges are obtained based on the curvature information of the edge segments.

US 2021/094566 A1 describes a method for detecting a lane for a transverse guidance of a vehicle. The transverse guidance of the vehicle is based on a roadway model. The method has the steps of ascertaining one or more features which are suitable for influencing the detection of the lane; detecting a lane on the basis of a sensor system of the vehicle; and ascertaining the roadway model on the basis of the detected lane and the ascertained one or more features. The method optionally has the steps of additionally receiving navigation data and transversely guiding the vehicle on the basis of the ascertained roadway model.

In this context, a detection of a color of a lane marking, especially with ASIL integrity, is very important, e.g., considering a vehicle reaction in case the lane marking color changes from white lanes to yellow lanes (at least in Europe) indicating a construction/obstruction on the road. Such kind of scenarios are important to identify and react automatically/automated without a need for human intervention.

However, known methods for determining a color of a lane marking often use the edges of the detected lane marking for determining the color of the lane marking. Such methods are often not reliable enough to be used in (highly) automated driving.

In light of this prior art, the object of the present invention is to provide a device and/or a method being suitable for overcoming at least the above-mentioned disadvantages of the prior art, respectively.

The object is solved by the features of the independent claim. The dependent claims have preferred further embodiments of the invention as their subject matter.

More specifically, the object is solved by a method for determining a color of a lane marking for an automated vehicle.

In other words, this approach is a method to detect a color of a lane with safety integrity not only for host lanes but also for adjacent lanes of the automated vehicle.

The method comprises a step of determining a bounding box of the lane marking based on sensor data of a sensor system installed at the automated vehicle, a step of determining a focus area being located completely inside the bounding box, and a step of determining the color of the lane marking by determining a color inside the focus area. A size of the focus area depends on a size of the bounding box.

The automated vehicle may be an automobile. The automated vehicle can be designed to take over lateral and/or longitudinal guidance at least partially and/or temporarily during automated driving of the automated vehicle.

The automated driving may be such that the driving of the vehicle is (largely) autonomous. The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The motor vehicle autonomously performs functions such as triggering the turn signal, changing lanes, and/or lane keeping. The driver can attend to other matters, but is prompted by the system to take over control within a warning time if needed.

The vehicle may be an autonomy level 4 motor vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

The lane marking may be a marking or boundary limiting a lane where the automated vehicle is currently located, e.g., driving, and/or limiting an adjacent lane of the automated vehicle. The lane marking may also be called road painting or road marking.

Here, the disadvantage of determining the color of the lane marking especially solely at the edge thereof (as done in the state of the art) is avoided by defining the focus area, i.e., a measuring area, being located fully inside the bounding box and thus inside the lane marking. Moreover, since a size of bounding boxes becomes smaller with an increasing distance from the lane marking to the automated vehicle, also the size of the focus area becomes smaller. Thus, by coupling the size of the focus area to the size of the bounding box it can be reliably avoided that a color of lane marking is measured outside the lane marking. Thus, the color of the lane marking may be reliably, e.g., with ASIL integrity, determined and thus may be used in (highly) automated driving.

As described above, the focus area is fully/completely located inside the lane marking. The focus area may have a round or a circular outer shape, but is not limited thereto and may have any other outer shape, e.g., a square, rectangle or any other shape. The bounding box may have substantially a shape of a rectangle but is not limited thereto. A shape of the bounding box may depend on a shape of the lane marking. Edges of the bounding box may be located on the edges of the lane marking and/or may be located slightly inside and/or outside the lane marking.

Determining the bounding box may comprise determining a width and a length of the bounding box and a distance between the bounding box and the automated vehicle.

Determining the bounding box may include detecting an outer edge and an inner edge of the lane marking with respect to a middle of a lane where the automated vehicle is located and setting an outer edge and an inner edge of bounding box accordingly. A center of the focus area may be located between the outer edge and the inner edge of the bounding box. The edge may also be called a boundary limiting the lane marking/bounding box on its left or right side.

Detecting the inner and the outer edge of the lane marking may include generating an edge image based on an image captured by a camera, i.e. based on camera data, corresponding to an environment of the automated vehicle.

Determining the (location of the) focus area may include determining a spline being located between the outer edge and the inner edge of the bounding box, wherein the center of the focus area may be located on the spline.

The spline may be a function defined piecewise by polynomials or a piecewise polynomial (parametric) curve. The spline may be used because of the simplicity of its construction, its ease and accuracy of evaluation, and its capacity to approximate complex shapes through curve fitting and interactive curve design.

Determining the spline may include determining a further spline corresponding to a run of the middle of the lane where the automated vehicle is located (so called host lane) and determining the spline being located between the outer edge and the inner edge of the lane marking based on the determined further spline.

More specifically, by using a spline a middle of the lane of the automated vehicle may be determined as, i.e., represented by, a defined curve. By knowing a width of the lane, the spline following the middle of the lane can be used, i.e., shifted to the left and/or the right by substantially half the width of the lane, to determine the spline running through the lane marking, preferably through the middle of the lane marking, and thus through the bounding box.

Additionally or alternatively, determining the bounding box may include detecting a first edge of the lane marking. The first edge may be substantially perpendicular to the outer edge and the inner edge of the lane marking. Additionally or alternatively, determining the focus area may include detecting a second edge of the lane marking. The second edge of the lane marking may be substantially perpendicular to the outer edge and the inner edge of the lane marking. The first edge may be closer to the automated vehicle than the second edge. A first and a second edge of the bounding box may be set according to/based on the determined first and second edge of the lane marking. The center of the focus area may be located between the first and the second edge of the bounding box.

Determining the first edge of the lane marking/bounding box, i.e., a back boundary of the lane marking/bounding box, and the second edge of the lane marking, i.e., a front boundary of the lane marking/bounding box, may be necessary when the lane marking is segmented to avoid determining a color of the road between two segments of lane marking inadvertently as the color of the lane marking.

Additionally or alternatively, determining the focus area may include determining at least two, preferably more than two, more preferably 2 to 5, sub focus areas. However, there may be more than 5 sub focus areas depending on accuracy requirements. The color of the lane marking may be determined by measuring a color inside the at least two sub focus areas.

The size of the focus area may or may not be equal to the inner edge and the outer edge. The at least two sub focus areas may have a predefined overlap. That is, to higher the reliability of the measurement of the color of the focus area the sub focus area may be located at least partly in the same area such that the color is measured substantially at the same spot or in the same area for at least two times thereby providing the possibility to double, i.e., cross, check the two (optionally consecutive) measurements.

The at least two sub focus areas may have the same or a different outer shape, e.g., a round or a circular outer shape, but is not limited thereto and may have any other outer shape, e.g., a square, rectangle or any other shape.

Additionally or alternatively, measuring the color inside the focus area may include multiple color measurements carried out in each one of the at least two sub focus areas to determine the color of the lane marking.

Additionally or alternatively, determining the focus area inside the bounding box and/or determining the color of the lane marking by measuring the color inside the focus area may be done using camera data as the sensor data, wherein the camera data may be provided by a camera installed at the automated vehicle.

The camera may be configured to provide image data, i.e., frames, corresponding to an environment of the automated vehicle. The image data may be color image data, grayscale image data and/or black and white image data. Measuring the color using the image data may include measuring or determining a reflectivity inside the focus area. Additionally or alternatively, the sensor data may include data captured by a LIDAR-sensor installed at the automated vehicle.

Determining the focus area inside the bounding box and/or determining the color of the lane marking by measuring the color inside the focus area may be done for at least two consecutive frames of the sensor, especially camera, data. That is, the camera data may be video data. Additionally, the method may include crosschecking the determined color of the at least two consecutive frames of the camera data.

The method may be carried out for at least two consecutive segments of the lane marking.

That is, the lane marking may be a solid lane and/or may be a dashed/dotted lane. The segments of the lane marking may be represented by rectangles using the outer and the inner edge as well as the first and the second edge of the bounding box determined as described above.

The method may include crosschecking the determined color of the at least two consecutive segments of the lane marking.

The above crosschecking or double checking leverages the reliability of the color of the lane marking determined with the above described method such that ASIL integrity/conformity can be provided.

Here ASIL is the Automotive Safety Integrity Level which is a risk classification scheme defined by the ISO 26262 - Functional Safety for Road Vehicles standard.

This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs (i.e., ASIL level) identified by the standard: ASIL A, ASIL B, ASIL C, ASIL D. ASIL D dictates the highest integrity requirements on the product and ASIL A the lowest. Hazards that are identified as QM do not dictate any safety requirements.

The method may comprise performing a plausibility check using a first machine learning based algorithm to plausibilize the size of the bounding box. This might be done by using/input the determined width, length and distance of the bounding box into the first machine learning based algorithm and to plausibilize the determined width and length of the bounding box based on the determined distance.

The term machine learning based algorithm describes an algorithm including a model which was trained with (suitable) training data before the implementation of the method using machine learning. The training data may be, automatically or manually, labelled training data. Machine learning as used herein may be understood as a generic term for the "artificial" generation of knowledge from experience: An artificial system learns from examples and can generalize these after the learning phase is complete. To do this, machine learning algorithms build a statistical model based on the training data. This means that the model does not simply learn the examples by heart, but recognizes patterns and regularities in the learning data. In this way, the system can also assess unknown data (learning transfer).

The training data for training the first machine learning based algorithm may include multiple data sets each one comprising a width and a length of a bounding box as well as distance of the bounding box to the automated car.

The method may comprise determining the size of the focus area, wherein the size of the focus area is determined using a second machine learning based algorithm taking as input the size of the bounding box and determining the size of the focus area based on the size of the bounding box.

The training data for training the second machine learning based algorithm may include multiple data sets each one comprising a size of a bounding box and a size of a focus area.

Determining the color of the lane marking by determining the color inside the focus area may comprise determining a sample area being located (optionally completely) inside the focus area and input the sensor data relating to the sample area into a third machine learning based algorithm and/or a deterministic algorithm. The sensor data may be grouped as multiple pixels based on multiple measurements (inside the sample area). Determining the color of the lane marking by determining the color inside the focus area may further comprise determining a color distribution inside the sample area based on the sensor data relating to the sample area using the third machine learning based algorithm and/or a deterministic algorithm. Determining the color of the lane marking by determining the color inside the focus area may further comprise determining the color of the lane marking based on the determined color distribution inside the sample area using the third machine learning based algorithm and/or a deterministic algorithm.

As will be also explained further in detail below, the method is not limited to one sample area but there may be multiple sample areas inside one focus area. In case of multiple sample areas, the color distribution may be determined in the above described manner for each one of the multiple sample areas, respectively. The color distributions of the multiple sample areas may be used by the third machine learning based algorithm to determine a color distribution of the focus area inside which the multiple sample areas are located. Furthermore, the color distribution of the focus area may be used by the third machine learning based algorithm to determine the color of the lane marking. Moreover, the method is not limited to the use of the third machine learning based algorithm but also the deterministic algorithm may be used (in the same manner as the third machine learning based algorithm) additionally or alternatively to the third machine learning based algorithm.

The training data for training the third machine learning based algorithm (which might be called/include a so called "dirt model") may include multiple data sets each one comprising a color distribution inside a sample area, a color distribution inside the sample area, sensor data relating to the sample area and a color of the sample area.

A size of the sample area may depend on a size of the focus area and/or on the size of the bounding box. That is, the size of the sample area may be coupled to the size of the bounding box such that it can be reliably avoided that a color of lane marking is measured outside the focus area. Thus, the color of the lane marking may be reliably, e.g., with ASIL integrity, determined and thus may be used in (highly) automated driving.

The method may comprise determining the size of the sample area, wherein the size of the sample area may be determined using a fourth machine learning based algorithm taking as input the size of the bounding box and/or the size of the focus area, and determining the size of the sample area based on the size of the bounding box and/or the size of the focus area.

The training data for training the fourth machine learning based algorithm may include multiple data sets each one comprising a size of the bounding box and/or a size of the focus area as well as a size of the sample area.

As explained above, the color of the lane marking may be determined based on multiple sample areas. Additionally, the method may include crosschecking the determined color of the at least two/multiple sample areas. Furthermore, the method is not limited to one focus area. That is, the method may include determining one or more focus areas in the above described manner, wherein each one of the focus areas may include one or more sample areas. In case of multiple focus areas, the color distribution may be determined in the above described manner for each one of the multiple focus areas, respectively. The focus multiple focus areas may be located in the same and/or different lane marking segments. The color distributions of the multiple focus areas may be used by the third machine learning based algorithm to determine the color of the lane marking. This may include determining a color of the focus areas, but it is also possible to directly use the color distribution of the focus areas to determine the color of the lane marking. The determined color distributions and/or the colors of the focus areas may be used, optionally by the third machine learning based algorithm, to perform a plausibility check by crosschecking the determined color distributions and/or colors of the focus areas. In other words, the color of the lane marking may be determined based on multiple measurements based on multiple focus areas inside multiple lane markings and based on a plausibility check performed using the colors from different focus areas. Moreover, the method is not limited to the use of the third machine learning based algorithm but also the deterministic algorithm may be used (in the same manner as the third machine learning based algorithm) additionally or alternatively to the third machine learning based algorithm.

Furthermore, a computing device configured to determine a color of a lane marking and to be installed at an automated vehicle is provided. The computing device comprises a bounding box determining, a focus area determining unit, and a lane color determining. The computing device may be configured to carry out the above described method at least partly.

The bounding box determining unit is configured to determine a bounding box of the lane marking based on sensor data of a sensor system installed at the automated vehicle. The focus area determining unit is configured to determine a focus area being located completely inside the bounding box. The lane color determining unit is configured to determine the color of the lane marking by determining a color inside the focus area. A size of the focus area depends on a size of the bounding box.

The bounding box determining unit may be configured to determine a width and a length of the bounding box and a distance between the bounding box and the automated vehicle in order to determine the bounding box.

The device may comprise a plausibility check unit comprising a first machine learning based algorithm and configured to plausibilize the determined width and length of the bounding box based on the determined distance using the first machine learning based algorithm.

The focus area determining unit may be configured to determine the size of the focus area, wherein the size of the focus area may be determined using a second machine learning based algorithm taking as input the size of the bounding box and determining the size of the focus area based on the size of the bounding box.

The lane color determining unit may be configured to determining the color inside the focus area by determining a sample area being located inside the focus area. A size of the sample area may depend on a size of the focus area and/or on the size of the bounding box. The lane color determining unit may be configured to determining the color inside the focus area by input the sensor data relating to the sample area into a third machine learning based algorithm and/or a deterministic algorithm, determining a color distribution inside the sample area based on the sensor data relating to the sample area using the third machine learning based algorithm and/or the deterministic algorithm, and determining the color of the lane marking based on the determined color distribution using the third machine learning based algorithm and/or the deterministic algorithm.

Furthermore, the lane color determining unit may be configured to determine the size of the sample area using a fourth machine learning based algorithm taking as input the size of the bounding box and/or the size of the focus area, and to determine the size of the sample area based on the size of the bounding box and/or the size of the focus area.

The lane color determining unit may be configured to determine the color of the lane marking based on multiple sample areas.

The description given above with respect to the method applies mutatis mutandis to the device and vice versa.

The above described may be summarized in other words and with respect to one solely exemplary implementation thereof.

A Vision system, i.e. a (front or surround view) camera, may be used to detect safety critical data such as information about host lanes and adjacent lanes for the host vehicle. The perception data from multiple frames may be used to detect the host lane and adjacent lane markings. The Safety critical information could be lane marking color, width and length as necessary inputs for the algorithm. The lane color checker focus may detect the color inside the width of the given lane marking bounding box. In this sampling method, a machine learning based algorithm may be used to create a focus area. The focus area could for example group different lane properties such as lane color according the lane color around the main focus area The samples may be not solely taken for an individual focus area but also around the main focus area. Here, the most important part is that the algorithm considers artificial intelligence (AI) based a sample area and respective grouped pixels analyzed based on machine learning models to extract correct color data in the sample area where the size of focus area could be decided based on bounding box of the lane segment. This could help to create a model for color interference/overlapping such as dirt, tire marking or two mixed lane colors, which could be filtered as non-relevant color of the lane markings.. Based on the multiple samples taken around the focus area and subsequently multiple measurements of sample areas to create a group of pixels which could either be marked as relevant, i.e. the correct lane color or irrelevant such as dirt on lane, tire marking or mixed color. the data may be provided to either an AI based model and or a deterministic model, which provide the color information for the given set of samples.

An embodiment is described with reference to figures 1 to 4 below.
- Fig. 1: schematically shows an automated vehicle comprising a computing device being configured to carry out a method for determining a color of a lane marking,
- Fig. 2: schematically shows a picture captured by a camera and/or any other relevant sensor such as LiDAR of the automated vehicle showing a lane marking of figure 1,
- Fig. 3: schematically shows a flow chart of the method for determining the color of the lane marking carried out by the computing device of the automated vehicle shown in figure 1, and
- Fig. 4: schematically shows a sample area inside a focus area being determined using the method of figure 3.

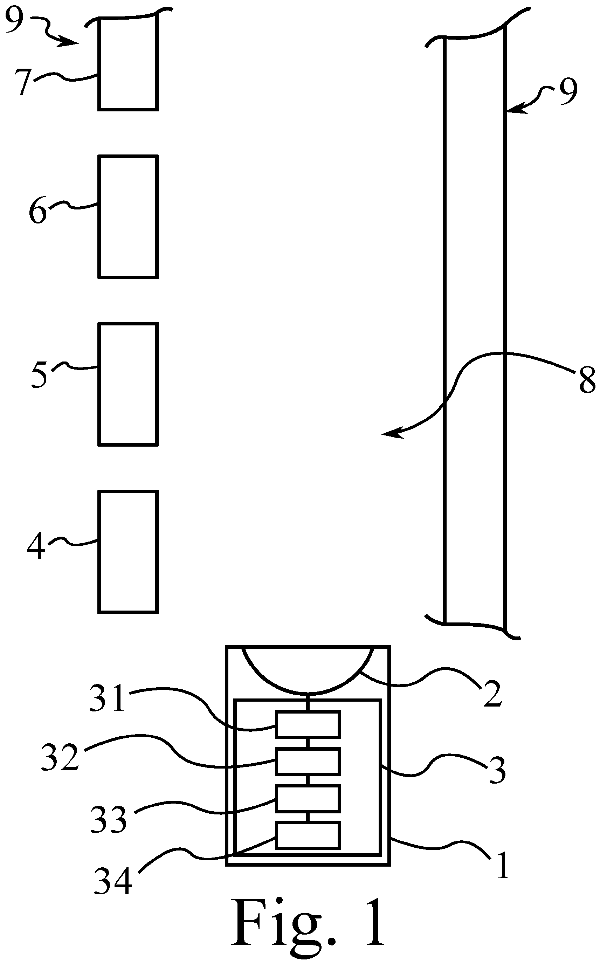

In the following a method for determining a lane color is described with reference to figures 1 to 4, wherein the same references signs are used for the same objects throughout the figures, and wherein the embodiment is just one specific example of implementing the invention and thus not limiting the scope of the invention as defined by the claims.

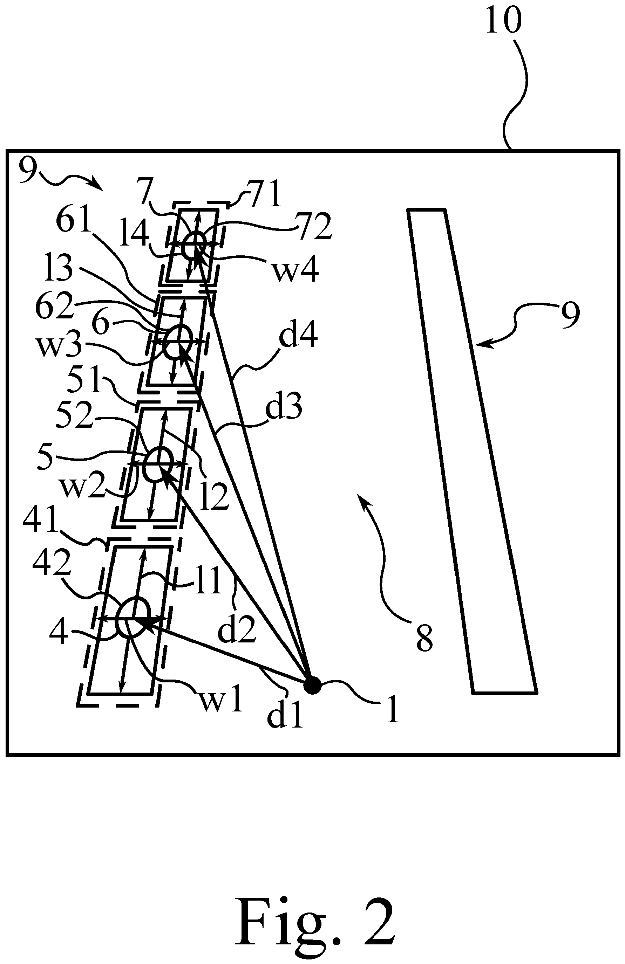

In figure 1 an automated vehicle 1 comprising a vision system, here a front camera 2 (the embodiment is not limited to the camera 2, since any other suitable sensor, e.g. a LiDAR sensor, may be used in addition or alternatively to the camera), and a computing device 3 being connected to the front camera 2 is shown in a top view. The computing device 3 is configured to carry out a method for determining a color of a lane marking 9, wherein a flow chart of the method is shown in figure 2.

More specifically, the lane marking 9 comprises multiple, here four, lane segments 4, 5, 6, 7 located on a left side of the automated vehicle 4 that are in a field of view of the camera 2. The lane marking 9 is a lateral boundary for a host lane 8, i.e., the lane 8 where the automated vehicle 1 is currently located.

Therefore, the computing device 3 receives sensor data from the vision system, i.e. from the camera 2, as input data to carry out the method. Here, the camera data comprises consecutive captured images of the surrounding in front of the automated vehicle 1.

The computing devices 3 comprises bounding box determining unit 31, a plausibility check unit 32, a focus area determining unit 33, and a lane color determining unit 34. The units 31 - 34 are connected to each other and a function thereof will be explained in detail below.

In figure 2 one of the pictures/frames 10 captured by the camera 2 is shown. The picture 10 shown in figure 2 was captured by the camera 2 in the situation of figure 1.

As can be gathered from figure 2, the lane marking segments 4 - 7, which have in reality the same size (see figure 1), become smaller in the picture 10 taken by the camera 2 when a distance of the lane marking segments 4 - 7 to the camera 2 (of the automated vehicle 1) increases.

Multiple consecutive frames 10 may be used to determine the lane color. However, in the following description it is assumed that only one frame 10 is used by the method but the description applies mutatis mutandis to other frames 10 in case multiple frames 10 are used.

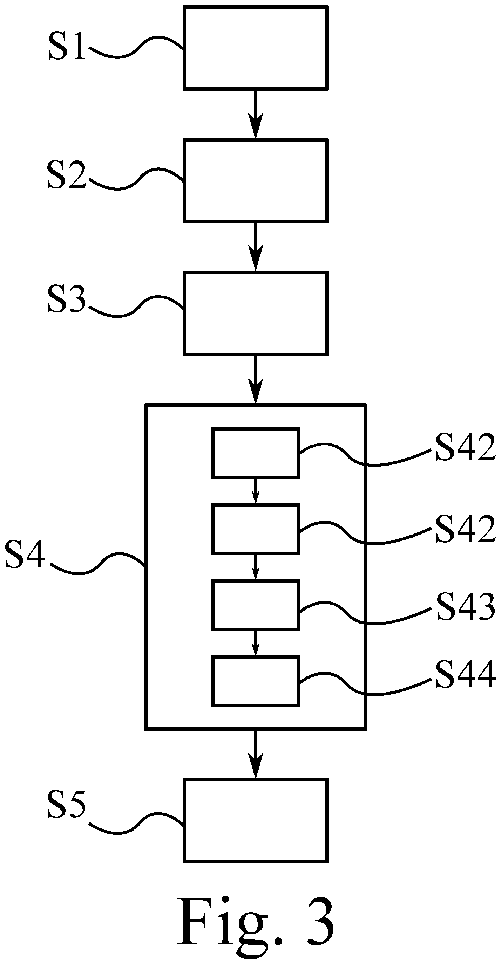

As can be gathered from figure 3, the method for determining the color of the lane marking 9 for the automated vehicle 1 comprises substantially five steps S1 - S5 and takes into account the decreasing size of the lane marking segments 4 - 7 in the captured sensor data when determining the color thereof, as will be explained in detail below.

In a first step S1 of the method, the bounding box determining unit 31 of the computing device 3 determines a bounding box 41 - 71 for each one of the lane marking segments 4 - 7, respectively, based on the picture 10 captured by the camera 2.

The bounding box determining unit 31 determines not only the location of each one of the bounding boxes 41 - 71, but determines also a respective size thereof including a width w1 - w4 and a length l1 - l4 of each one of the bounding boxes 41 - 71 as well as a distance d1 - d4 between the respective one of the bounding boxes 41 - 71 and the automated vehicle 1.

In a second step S2 of the method, the plausibility check unit 32 plausibilizes the determined width w1 - w4 and length l1 - l4 of each one of the bounding boxes 4 - 7 based on the respective determined distance d1 - d4.

Therefore, the plausibility check unit 32 comprises a first machine learning based algorithm taking as an input the respective length l1 - l4, width w1 - w4 and distance d1 - d4 of the respective bounding box 4 - 7 and plausibilizes the respective determined width w1 - w4 and length l1 - l4 of the respective bounding box 4 - 7 based on the respective determined distance d1 - d4 using the first machine learning based algorithm.

If the output of the plausibility check unit 32 is that the determined widths w1 - w4 and length l1 - l4 of the bounding boxes 4 - 7 are plausible, the focus area determining unit 33 carries out a third step S3 of the method.

In the third step S3 of the method, the focus area determining unit 33 determines a focus area 42 - 72 for each one of the determined bounding boxes 4 - 7, respectively, wherein the respective focus area 42 - 72 is located completely inside the respective bounding box, 4 - 7. To do so, the focus area determining unit 33 adapts a size of the respective focus area 42 - 72 to the size of the respective bounding box 4 -7. That is, the size of the respective focus area 42 - 72 depends on the size of the respective bounding box 4 - 7.

More specifically, the focus area determining unit 33 determines the size of the respective focus area 42 - 72 by using a second machine learning based algorithm, the second machine learning based algorithm taking as input the size of the respective bounding box 41 - 71, especially the respective width w1 - w4 and length l1 - l4 thereof, and determines the size of the focus area based on the size of the respective bounding box 41 - 71.

In a fourth step S4 of the method, the lane color determining unit 34 determines the color of each one of lane marking segments 4 - 7 by determining a color inside the respective focus area 42 - 72.

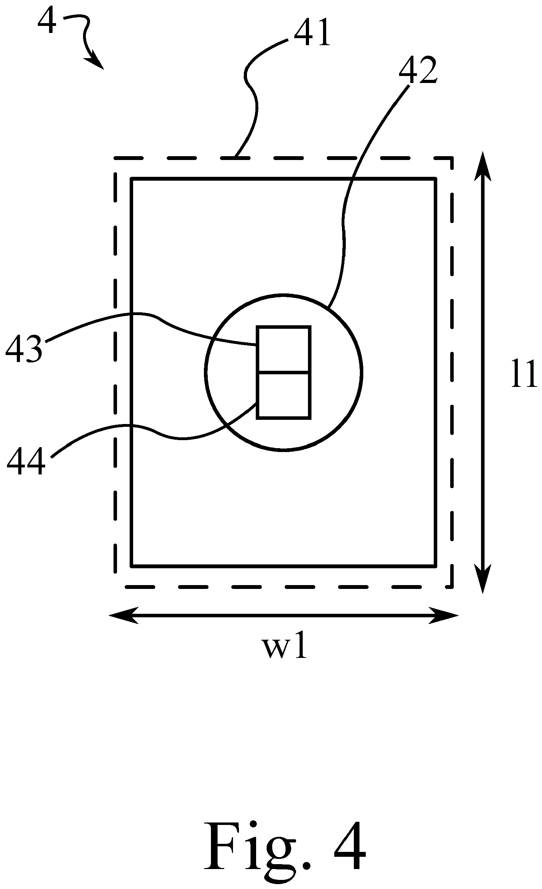

More specifically, determining the color of each one of lane marking segments 4 - 7 in the fourth step S4 of the method comprises four sub step S41 - 44, and is shown in detail in figure 4. More specifically, in figure 4 solely a first one of the lane marking segments 4 is shown schematically in detail, wherein the four sub steps S41 - 44 described below are carried out for each one of the four lane marking segments 4 -7, respectively.

In a first one of the four sub steps S41, the lane color determining unit 34 determines multiple, here two, sample areas 43, 44 being located inside the focus area, wherein a size of the respective sample area 43, 44 depends on the size of the focus area 42 and/or on the size of the bounding box 41. More specifically, the lane color determining unit 34 determines the size of the respective sample area 43, 44 using a fourth machine learning based algorithm taking as input the size of the bounding box 41, especially the length l1 and width w1 thereof, and/or the size of the focus area 42 and determines the size of the respective sample area 43, 44 based on the size of the bounding box 41 and/or the size of the focus area 42. Each sample area 43, 44 is determined to such that it is fully/completely located inside the focus area 42.

Afterwards, the sensor data relating to the respective sample area 43, 44 is input as a whole and/or grouped as multiple pixels based on multiple measurements into a third machine learning based algorithm and/or a deterministic algorithm by the lane color determining unit 34 in a second sub step S42.

In a third sub step S43, the lane color determining unit 34 determines a color distribution inside each one of the sample areas 43, 44 based on the respective sensor data relating to the respective sample area 43, 44 using the third machine learning based algorithm and/or the deterministic algorithm.

In a fourth step S44, the lane color determining unit 34 determines the color of the lane marking segment 4 based on the determined color distributions using the third machine learning based algorithm and/or the deterministic algorithm.

Since the four sub steps S41 - S44 are carried out for all of the lane marking segments 4 - 7, the lane marking color 9 may be determined in a fifth step S5 of the method based on the determined colors of the lane marking segments 4 - 7. The fifth step S5 may include plausibilize the determined lane color by cross checking the color distribution of the multiple sample areas 43, 44.

Moreover, in the above given disruption only one focus area 42 - 72 per bounding box 41 - 71 of the multiple lane marking segments 4 - 7 is used for determining the color of the lane marking 9. That is, multiple focus areas 42 - 72 which are located inside different bounding boxes 41 - 71 within a given/predetermined distance from the automated vehicle 1 are used to determine the color of lane marking 9. However, the method is not limited thereto. That is, alternatively or additionally, the color of the lane marking 9 may be decided/determined based on multiple focus areas 42 - 72 per bounding box 41 - 71 of the multiple lane marking segments 4 - 7 (i.e., not only one focus area 42 - 72 of one bounding box 41 - 71, as described above, may be used to determine the color of the lane marking 9). Moreover, in any case, each focus area 42 - 72 may include one or more sample areas 43, 44, wherein the number and/or size of the sample area(s) 43, 44 per focus area 42 - 72 may depend on the size of the respective bounding box 41 - 71 and/or the size of the respective focus area 42 - 72 inside which the respective sample area(s) 43, 44 is/are located.

### Reference signs

- 1: automated vehicle
- 2: sensor system comprising a camera and or similar sensors such as a LiDAR sensor
- 3: computing device
- 31: bounding box determining unit
- 32: plausibility check unit
- 33: focus area determining unit
- 34: lane color determining unit
- 4 - 7: lane marking segments
- 41 - 71: bounding box
- 42 .-72: focus area
- 43, 44: sample area
- 9: lane marking
- 10: picture/frame of sensor data
- l1 - l4: length of bounding box
- w1 - w4: width of bounding box
- d1 - d4: distance of bounding box to automated vehicle, especially to the camera installed at the automated vehicle

## Claims

1. Method for determining a color of a lane marking (9) for an automated vehicle (1), **characterized in that** the method comprises:
- determining (S1) a bounding box (41 - 71) of the lane marking (9) based on sensor data of a sensor system (2) installed at the automated vehicle (1),
- determining (S3) a focus area (42 - 72) being located completely inside the bounding box (41 - 71), and
- determining (S4) the color of the lane marking (9) by determining a color inside the focus area (42 - 72),
- wherein a size of the focus area (42 - 72) depends on a size of the bounding box (41 - 71).

2. Method according to claim 1, **characterized in that** determining (S1) the bounding box (41 - 71) comprises determining a width (w1 - w4) and a length (11 - 14) of the bounding box (41 - 71) and a distance (d1 - d4) between the bounding box (41 - 71) and the automated vehicle (1).

3. Method according to claim 1 or 2, **characterized in that** the method comprises performing (S2) a plausibility check using a first machine learning based algorithm to plausibilize the size of the bounding box (41 - 71), optionally to plausibilize the determined width (w1 - w4) and length (11 - 14) of the bounding box (41 - 71) based on the determined distance (d1 - d4).

4. Method according to claim 1 or 3, **characterized in that** the method comprises determining (S3) the size of the focus area (42 - 72), wherein the size of the focus area (42 - 72) is determined using a second machine learning based algorithm taking as input the size of the bounding box (41 - 71) and determining the size of the focus area (42 - 72) based on the size of the bounding box (41 - 71).

5. Method according to any of claims 1 to 4, **characterized in that** determining (S4) the color of the lane marking (9) by determining the color inside the focus area (42 - 72) comprises:
- determining (S41) a sample area (43, 44) being located inside the focus area (42 - 72),
- input (S42) the sensor data relating to the sample area (43, 44), optionally grouped as multiple pixels based on multiple measurements, into a third machine learning based algorithm and/or a deterministic algorithm,
- determining (S43) a color distribution inside the sample area (43, 44) based on the sensor data relating to the sample area (43, 44) using the third machine learning based algorithm and/or the deterministic algorithm, and
- determining (S44) the color of the lane marking (9) based on the determined color distribution inside the sample area (43, 44) using the third machine learning based algorithm and/or the deterministic algorithm.

6. Method according to claim 5, **characterized in that** a size of the sample area (43, 44) depends on a size of the focus area (42 - 72) and/or on the size of the bounding box (41 - 71).

7. Method according to claim 5 or 6, **characterized in that** the method comprises determining the size of the sample area (43, 44), wherein the size of the sample area (43, 44) is determined using a fourth machine learning based algorithm taking as input the size of the bounding box (41 - 71) and/or the size of the focus area (42 - 72), and determining the size of the sample area (43, 44) based on the size of the bounding box (41 - 71) and/or the size of the focus area (42 - 72).

8. Method according to any of claims 5 to 7, **characterized in that** the color of the lane marking (9) is determined based on multiple sample areas, optionally inside one or multiple focus areas.

9. Computing device (3) configured to determine a color of a lane marking (9) and to be installed at an automated vehicle (1), **characterized in that** the computing device (3) comprises:
- a bounding box determining unit (31) configured to determine a bounding box (41 - 71) of the lane marking (9) based on sensor data of a sensor system (2) installed at the automated vehicle (1),
- a focus area determining unit (33) configured to determine a focus area (42 - 72) being located completely inside the bounding box (41 - 71), and
- a lane color determining unit (34) configured to determine the color of the lane marking (9) by determining a color inside the focus area (42 - 72),
- wherein a size of the focus area (42 - 72) depends on a size of the bounding box (41 - 71).

10. Device (3) according to claim 9, **characterized in that** the bounding box determining unit (31) is configured to determine a width (w1 - w4) and a length (11 - 14) of the bounding box (41 - 71) and a distance (d1 - d4) between the bounding box (41 - 71) and the automated vehicle (1) in order to determine the bounding box (41 - 71).

11. Device (3) according to claim 9 or 10, **characterized in that** the device (3) comprises a plausibility check unit (32) comprising a first machine learning based algorithm and being configured to plausibilize the size of the bounding box (41 - 71), optionally to plausibilize the determined width (w1 - w4) and length (11 - 14) of the bounding box (41 - 71) based on the determined distance (d1 - d4), using the first machine learning based algorithm.

12. Device (3) according to any of claims 9 to 11, **characterized in that** the focus area determining unit (33) is configured to determine the size of the focus area (42 - 72), wherein the size of the focus area (42 - 72) is determined using a second machine learning based algorithm taking as input the size of the bounding box (41 - 71) and determining the size of the focus area (42 - 72) based on the size of the bounding box (41 - 71).

13. Device (3) according to any of claims 9 to 12, **characterized in that** the lane color determining unit (34) is configured to determine the color of the lane marking (9) by determining the color inside the focus area (42 - 72) by:
- determining a sample area (43, 44) being located inside the focus area (42 - 72), wherein optionally a size of the sample area (43, 44) depends on a size of the focus area (42 - 72) and/or on the size of the bounding box (41 - 71),
- input the sensor data relating to the sample area (43, 44), optionally grouped as multiple pixels based on multiple measurements, into a third machine learning based algorithm and/or a deterministic algorithm,
- determining a color distribution inside the sample area (43, 44) based on the sensor data relating to the sample area (43, 44) using the third machine learning based algorithm and/or the deterministic algorithm, and
- determining the color of the lane marking (9) based on the determined color distribution inside the sample area (43, 44) using the third machine learning based algorithm and/or the deterministic algorithm.

14. Device (3) according to claim 13, **characterized in that** the lane color determining unit (34) is configured to determine the size of the sample area (43, 44) using a fourth machine learning based algorithm taking as input the size of the bounding box (41 - 71) and/or the size of the focus area (42 - 72), and to determine the size of the sample area (43, 44) based on the size of the bounding box (41 - 71) and/or the size of the focus area (42 - 72).

15. Device (3) according to claim 13 or 14, **characterized in that** the lane color determining unit (34) is configured to determine the color of the lane marking (9) based on multiple sample areas (43,44), optionally inside one or multiple focus areas (42 - 72).
